# EUROPÄISCHE PATENTANMELDUNG

(11) **EP 1 264 733 A1**
(43) Veröffentlichungstag der Anmeldung: **11.12.2002**
(21) Anmeldenummer: 02012512.6
(22) Anmeldetag: 04.06.2002
(51) Int. Cl.: B60R 1/00, B60R 1/10

(54) **Aussenspiegel für Kraftfahrzeuge**

(30) Priorität: 08.06.2001 DE 10127886
(71) Anmelder: MEKRA Lang GmbH & Co. KG, 90765 Fürth (DE)
(72) Erfinder: Lang, Heinrich, 91465 Ergersheim (DE); Popp, Albrecht, 91629 Weihenzell (DE)
(74) Vertreter: Winter, Brandl, Fürniss, Hübner, Röss, Kaiser, Polte Partnerschaft

(57) **Zusammenfassung**

Außenspiegel für Kraftfahrzeuge, insbesondere Nutzfahrzeuge, zur Überwachung zumindest eines Teilbereiches in Fahrtrichtung vor dem Fahrzeug, mit einem wenigstens eine Spiegelscheibe lagernden Spiegelgehäuse, welches mit wenigstens einem Haltearm (6) am Fahrzeug im Sichtbereich des Fahrers festlegbar ist, wobei: der wenigstens eine Haltearm (6) an seinem dem Spiegelgehäuse abgewandten Ende Befestigungsmittel aufweist, mit welchen er oberhalb der Sitzhöhe des Fahrers in Fahrtrichtung vor der Windschutzscheibe des Fahrzeuges befindlich festlegbar ist; die Befestigungsmittel in Form einer Halteplatte (2) ausgebildet sind, an welcher der Haltearm (6) gelagert ist; und die Halteplatte (2) an einem Karosserieteil (4) des Fahrzeuges, insbesondere der Windschutz- oder Frontscheibe in nachrüstbarer Weise anklebbar ist.

## Beschreibung

Die Erfindung betrifft einen Außenspiegel für Kraftfahrzeuge, insbesondere Nutzfahrzeuge, zur Überwachung zumindest eines Teilbereiches in Fahrtrichtung vor dem Fahrzeug.

Bei Kraftfahrzeugen und hier insbesondere Nutzfahrzeugen, beispielsweise LKW's oder Omnibussen besteht generell das Problem, daß für den Fahrer der Bereich in Fahrtrichtung vor dem Fahrzeug, d.h. vor der vorderen Windschutzscheibe nur bedingt bzw. bis hinunter auf Fahrbahnniveau oft gar nicht einsehbar oder überblickbar ist. Speziell bei Omnibussen besteht somit stets die Gefahr, daß sich unmittelbar vor dem Omnibus befindliche Personen, beispielsweise Schulkinder nicht erkannt werden können und entsprechend gefährdet sind.

Die normalerweise, d.h. serienmäßig bei insbesondere Nutzfahrzeugen vorhandenen Außenspiegel vermögen nicht dieses Problem zu beseitigen, da sie als reguläre Rückspiegel ausgebildet sind, d.h. einen Blick in Fahrtrichtung nach hinten ermöglichen, oder aber als Beobachtungsspiegel für die Einstiegstüren, d.h. für die Fahrzeugseite eingestellt sind.

Darüber hinaus laufen mittlerweile Bestrebungen, bei Nutzfahrzeugen und hier insbesondere LKWs und Omnibussen bindend eine Möglichkeit vorzuschreiben, die es dem Fahrer des Fahrzeugs ermöglicht, den Raum in Fahrtrichtung vor dem Fahrzeug überblicken zu können. Bei Neufahrzeugen kann einer derartigen Reglementierung in aller Regel dadurch Rechnung getragen werden, daß zusätzlich zu den bereits serienmäßig zu montierenden Rückspiegeln und Rangierspiegeln noch ein weiterer Spiegel an der Karosserie angeordnet, beispielsweise angeschraubt wird, mit welchem der Fahrer den Raum vor dem Fahrzeug überblicken kann.

Bei bereits sich im Einsatz befindlichen Fahrzeugen ergibt sich jedoch das Problem, daß ein derartiger zusätzlicher Spiegel oder im Bedarfsfall auch zwei derartige Spiegel (einer auf der Fahrer- und einer auf der Beifahrerseite) aufgrund der bereits vorhandenen Rückund Rangierspiegel nicht mehr an der Karosserie befestigt werden können, da der dort zur Verfügung stehende Raum durch die bereits serienmäßig vorhandenen Spiegel bzw. Spiegelhalterungen belegt ist.

Die Erfindung hat es sich dem gegenüber zur Aufgabe gemacht, einen Außenspiegel bereitzustellen, der bei bereits sich im Betrieb oder im Einsatz befindlichen Fahrzeugen ohne Probleme und ohne großen Aufwand (z.B. Bohrund Verschraubungsarbeiten an der Karosserie) nachträglich montiert werden kann.

Zur Lösung dieser Aufgabe schlägt die vorliegende Erfindung gemäß Anspruch 1 vor, eine Halteplatte vorzusehen, von der wenigstens ein Haltearm vorspringt, an dem wiederum ein den Spiegel lagerndes Spiegelgehäuse angeordnet ist. Die Halteplatte, welche als Befestigungsmittel dient, ist an einen Karosserieteil des Fahrzeuges und hier insbesondere der Windschutz- oder Frontscheibe in nachrüstbarer Weise anklebbar.

Durch das Merkmal, daß die Halteplatte in nachrüstbarer Weise anklebbar ist, entfallen im Falle der Nachrüstung aufwendige Befestigungsmaßnahmen. Insbesondere kann zur Befestigung der Halteplatte auf Karosseriestellen oder Fahrzeugteile allgemein zurückgegriffen werden, welche mit einer klassischen Befestigungsmethode, beispielsweise einer anzuschraubenden Halteplatte nur bedingt oder gar nicht verwendet werden könnten, beispielsweise die Windschutz- oder Frontscheibe, an der sich Bohr- und Schraubarbeiten in naheliegender Weise verbieten.

Durch das Merkmal der Nachrüstbarkeit kann der erfindungsgemäße Außenspiegel bedarfsgemäß verwendet werden. In manchen Fällen, beispielsweise bei bestimmten Fahrzeugtypen sind möglicherweise Außenspiegel, mit denen in Fahrtrichtung vor das Fahrzeug geblickt werden kann, nicht zwingend notwendig. Auch andere Fälle sind möglich oder denkbar, bei denen derartige Außenspiegel unnötig oder unerwünscht sind. In all diesen Fällen wären dann derartige Außenspiegel, welche bereits herstellerseitig serienmäßig vorgesehen sind, unnötig oder unerwünscht und ein potentieller Käufer wäre unter Umständen nicht gewillt, den Mehrpreis für einen derartigen Sonder-Außenspiegel zu entrichten. Durch das Merkmal der Nachrüstbarkeit des erfindungsgemäßen Außenspiegels wird dieses Problem beseitigt, da der Außenspiegel, mit welchem zumindest ein Teilbereich in Fahrtrichtung vor dem Fahrzeug überwachbar ist, nur auf Wunsch des Kunden bzw. bei Bedarf in nachrüstbarer Weise am Fahrzeug angebracht wird. Hierbei kann bestimmten fahrzeug- oder kundenspezifischen Anforderungen oder Wünschen Rechnung getragen werden. Bereits sich im Betrieb befindliche Fahrzeuge können jederzeit problemlos und rasch mit dem erfindungsgemäßen Außenspiegel nachgerüstet werden, um beispielsweise bei Omnibussen die Sicherheit zu erhöhen.

Der Haltearm ist an der Halteplatte bevorzugt beweglich verstellbar gelagert. Hierzu kann beispielsweise gemäß einer vorteilhaften Ausgestaltungsform zwischen dem Haltearm und der Halteplatte ein Kugelgelenk vorhanden sein, welches eine allseitige Verstellbarkeit ermöglicht. Alternativ hierzu oder zusätzlich kann sich auch zwischen dem anderen freien Ende des Haltearms und dem Spiegelgehäuse ein entsprechend ausgebildetes Verstellgelenk befinden, wobei dann wiederum gegebenenfalls der Haltearm starr an der Halteplatte festgelegt sein kann oder nur über ein einfaches, einen Freiheitsgrad in einer Richtung erlaubendes Schwenkgelenk an der Halteplatte festgelegt sein kann.

Bevorzugt ist die Lagefixierung des Haltearms gegenüber der Halteplatte im normalen Betrieb bleibend, d.h. im wesentlichen starr, bei Übersteigen einer bestimmten, auf die Lagerung einwirkenden Kraft ist diese Lagefixierung jedoch aufhebbar. Beispielsweise dann, wenn der Außenspiegel gegen ein Hindernis stößt, sollte die Lagefixierung bevorzugt aufhebbar sein, so daß der Haltearm zusammen mit dem Spiegelgehäuse der einwirkenden Kraft nachgibt und wegschwenkt und somit nicht beschädigt wird.

Bevorzugt wird die Halteplatte im Bereich des oberen Randes der Windschutzscheibe angeklebt. Hierdurch ist ein großer Abstand zwischen Spiegelfläche und zu überwachendem Bereich und damit ein entsprechend großes Blickfeld sichergestellt.

Bei einer Verklebung der Halteplatte mit dem Glas der Windschutzscheibe liegt im Bereich der Verklebung bevorzugt die Schichtfolge Glas - Primer - Klebstoff - Halteplatte vor. Das Aufbringen eines Primers auf die Windschutzscheibe vor der Verklebung bewirkt unter anderem eine Anrauhung der Glasoberfläche, so daß der aufgebrachte Klebstoff eine bessere Haltekraft hat.

Als Klebstoffe kommen Kleber in Frage, welche bevorzugt aus der folgenden Gruppe von Klebstoffen ausgewählt werden: Klebstoffe auf Silikon-, Epoxy- oder Polyurethanbasis, Zweikomponentenkleber oder Einkomponentenkleber oder andere witterungs- und UV-beständige, alterungsresistente Klebematerialien.

Bevorzugt ist die Halteplatte in ihrer Formgebung an den Untergrund angepasst, mit welchem sie zu verkleben ist. Ist beispielsweise die Halteplatte zur Verklebung mit einer konvex gewölbten Stelle der Windschutzscheibe oder eines Karosserieteils gedacht, besitzt sie in vorteilhafter Weise an ihrer Klebeoberfläche eine entsprechend angepasste konkave oder kugelkalottenförmige Gestaltung, um sich der Kontur des Klebeuntergrundes optimal anpassen zu können. Hierbei ist es darüber hinaus denkbar, eine Mehrzahl von unterschiedlichen Halteplatten vorzusehen, welche entsprechend unterschiedliche Wölbungen oder Krümmungsradien haben, um eine optimale Anpassung an die jeweilige Verbindungsstelle zu erhalten.

Auch ist es möglich, die Halteplatten aus einem thermoplastischen Material zu fertigen, welches vor dem eigentlichen Verklebungsvorgang erwärmt und damit erweicht wird und im Anschluss daran an die spätere Verklebungsstelle gedrückt wird, um sich an die dortige Kontur anzupassen. Nach Abkühlung und damit wieder Erhärtung des Thermoplasten kann dann der eigentliche Klebevorgang erfolgen.

Eine weitere Möglichkeit, die Halteplatte möglichst gut an die Befestigungsstelle anzupassen ist, die Halteplatte aus wenigstens zwei Teilplatten zu bilden, welche untereinander gelenkig verbunden sind. Auch hierdurch ist eine Art Anschmiegung oder Anpassung an gewölbte oder sphärisch ausgebildete Untergründe möglich. Im Bedarfsfall lassen sich die beiden genannten Möglichkeiten auch kombinieren, d.h. die wenigstens zwei gelenkig miteinander verbundenen Teilplatten in der Halteplatte haben jeweils eine konkave oder kugelkalottenförmige Form.

Weitere Einzelheiten, Aspekte und Vorteile der vorliegenden Erfindung ergeben sich aus der nachfolgenden Beschreibung anhand der Zeichnung.

Es zeigt:
Fig. 1 schematisch vereinfacht einen Schnitt durch eine mittels einer Verklebung festgelegte Halteplatte;
Fig. 2 die Ausgestaltung einer Halteplatte, welche aus zwei Teilplatten besteht, die untereinander gelenkig verbunden sind; und
Fig. 3 eine Fig. 2 entsprechende Darstellung einer anderen Ausgestaltungsform einer quasi zweiteiligen Halteplatte.

Die nachstehende Beschreibung von Ausführungsformen der vorliegenden Erfindung ist als rein illustrativ und nicht einschränkend zu verstehen. Es ist eine Vielzahl von Modifikationen und Abwandlungen möglich, ohne vom Umfang und Gegenstand der vorliegenden Erfindung abzuweichen.

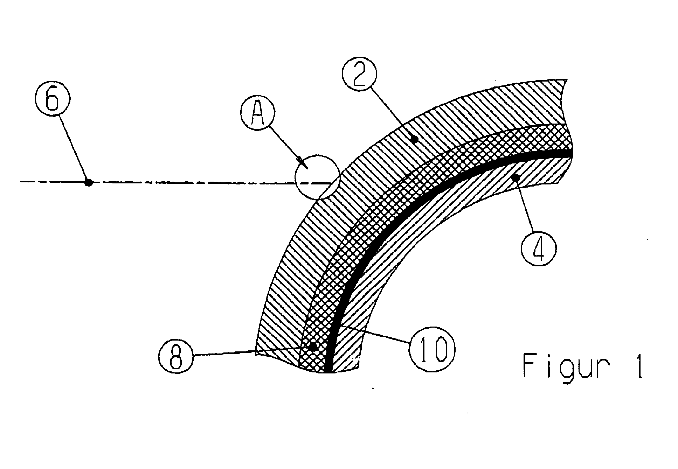

Fig. 1 zeigt schematisch vereinfacht die Anbringung einer als Befestigungsmittel dienenden Halteplatte 2 an einem Karosserieteil 4 eines Fahrzeugs. Das Karosserieteil 4 ist insbesondere eine Windschutz- oder Frontscheibe, wobei die Anbringung der Halteplatte 2 im Sichtbereich des Fahrers und oberhalb der Sitzhöhe des Fahrers erfolgt. Die Halteplatte 2 trägt einen mit einer strichpunktierten Linie in Fig. 1 versinnbildlichten Haltearm 6, der im Bereich eines Kreises A auf geeignete Weise mit der Halteplatte 2 verbunden ist. Als Verbindung zwischen Halteplatte 2 und Haltearm 6 kommt eine Mehrzahl von Ausgestaltungsformen in Frage, beispielsweise ein einfaches Schwenkgelenk, ein Kugelgelenk, eine starre Verbindung, eine Verschraubung, eine Steckverbindung, eine Klemmverbindung, eine Bajonettverbindung etc. Die Lagefixierung des Haltearms 6 gegenüber der Halteplatte 2 ist bevorzugt so, daß bei Übersteigung einer bestimmten, auf die Lagerung im Bereich A einwirkenden Kraft die Verbindung zwischen Halteplatte 2 und Haltearm 6 nachgiebig wird, d.h. der Haltearm 6 kann durch Verschwenken der einwirkenden Kraft ausweichen.

Zur Befestigung der Halteplatte 2 am Karosserieteil 4 wird ein Kleber 8 verwendet. Als möglicher Kleber kommt u.a. ein Kleber auf Epoxy-, Silikon- oder Polyurethanbasis in Frage, wobei die Schichtdicke des Klebers insbesondere dann, wenn dieser auf Silikonbasis ist, bevorzugt wenigstens 3 mm betragen sollte, um zwischen dem Karosserieteil 4 und der Halteplatte 2 eine vollflächige Verklebung sicherzustellen, auch dann, wenn die Halteplatte 2 geringfügig von der Kontur des Karosserieteils 4 abweicht. Andere verwendbare Kleber sind Ein- oder Zweikomponentenkleber, welche UV- oder wärmeaushärtend sind. Die letztendlich zu verwendende Kleberart hängt von den gegebenen Verklebungsumständen oder -bedingungen ab.

Gemäß Fig. 1 ist bevorzugt die Halteplatte 2 in ihrer Formgebung an die Formgebung des Karosserieteils 4 angepasst, um eine möglichst gleichmäßige Schichtdicke des Klebers 8 und eine optimale Anpassung der Halteplatte 2 an den Befestigungsort des Karosserieteils 4 zu haben. Beispielsweise bei einer im oberen Randbereich gemäß Fig. 1 konvex nach außen gewölbten Stelle des Karosserieteils oder der Frontscheibe weist die Klebefläche der Halteplatte 2 eine entsprechend konkave oder kugelkalottenförmigen Formgebung auf, so daß die beiden aneinanderliegenden Flächen mit dem Kleber 8 dazwischen im wesentlichen parallel zueinander verlaufen und ein im wesentlichen gleichmäßig dickes Kleberbett sicherstellen.

Ist das Karosserieteil 4 eine Windschutz- bzw. Frontscheibe, so wird zwischen diese Scheibe und den Kleber 8, d.h. vor dem Aufbringen des Klebers auf die Fläche, in der die Verklebung stattfinden soll, ein sogenannter Primer 10 aufgebracht, der in Fig. 1 in seiner Schichtdicke übertrieben dick dargestellt ist. Ein derartiger Primer ist eine Art Grundierung oder ein Haftvermittler, bricht Oxidschichten auf, rauht die Klebeoberfläche auf etc. und bewirkt somit eine bessere Anhaftung des Klebers 8 und damit eine bessere Verbindung zwischen Karosserieteil 4 und Halteplatte 2.

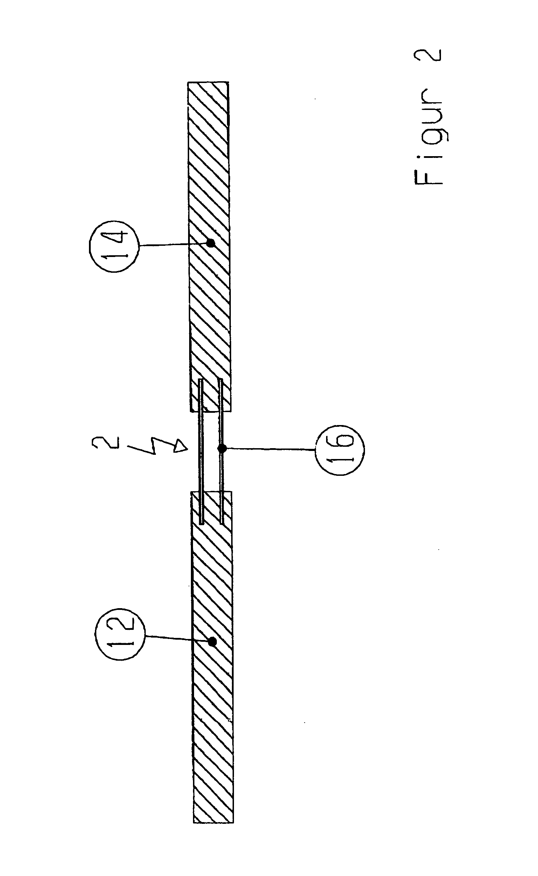

Anstelle der Formanpassung der Halteplatte 2 gemäß Fig. 1 kann diese auch gemäß Fig. 2 aus wenigstens zwei Teilen oder Teilplatten 12 oder 14 bestehen, welche über eine geeignete Gelenk- oder Scharnierverbindung 16 miteinander verbunden sind. Auch hierdurch ist eine bessere Anpassung oder Anlage der Halteplatte 2 an das entsprechende Karosserieteil 4 möglich.

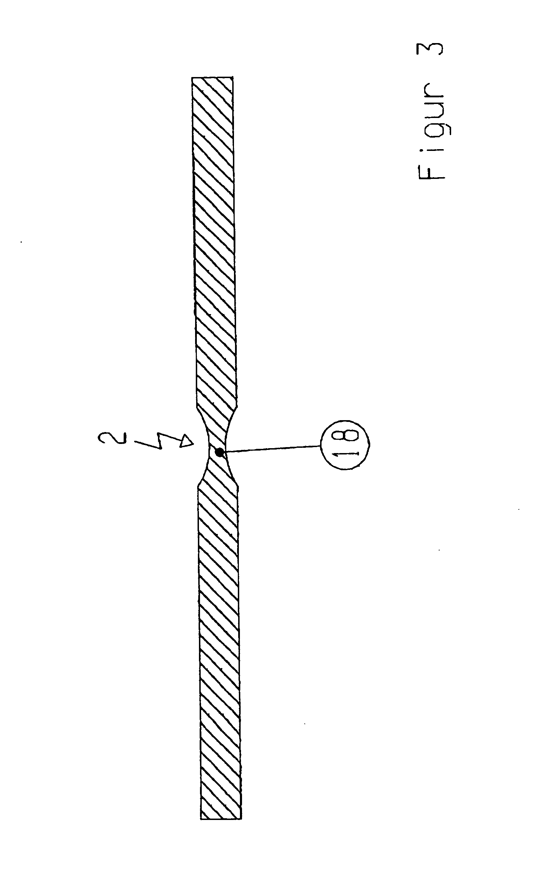

Anstelle der zweiteiligen Ausführung der Halteplatte 2 mit den beiden Teilplatten 12 und 14 kann diese gemäß Fig. 3 im wesentlichen einstückig ausgebildet sein, wobei sich jedoch wenigstens eine Einziehung oder Verdünnung 18 im Material der Halteplatte 2 befindet, welche als eine Art Filmscharnier dient und eine gewisse Beweglichkeit der Halteplatte 2 in sich zur besseren Anpassung oder Anschmiegung an die jeweilige Oberflächenkontur erlaubt.

Das freie Ende des Haltearms 6 trägt ein Spiegelgehäuse, in welchem dann die eigentliche Spiegelscheibe gelagert ist. Bei groß bauendem Spiegelgehäuse ist es auch möglich, zwei voneinander unabhängige Halteplatten 2 vorzusehen, von welchen zwei Haltearme 6 vorstehen, welche dann gemeinsam ein einzelnes entsprechend großes Spiegelgehäuse tragen.

Durch die Möglichkeit der Verklebung der Halteplatte 2 mit dem Karosserieteil 4 und hier insbesondere der Windschutz- oder Frontscheibe ist eine problemlose Nachrüstbarkeit des erfindungsgemäßen Außenspiegels gewährleistet, wobei ein besonders hoher Freiheitsgrad bezüglich der Anbringmöglichkeiten besteht, was insbesondere bei Nachrüstarbeiten wesentlich ist.

## Patentansprüche

1. Außenspiegel für Kraftfahrzeuge, insbesondere Nutzfahrzeuge, zur Überwachung zumindest eines Teilbereiches in Fahrtrichtung vor dem Fahrzeug, mit
einem wenigstens eine Spiegelscheibe lagernden Spiegelgehäuse, welches mit wenigstens einem Haltearm (6) am Fahrzeug im Sichtbereich des Fahrers festlegbar ist,
wobei:
der wenigstens eine Haltearm (6) an seinem dem Spiegelgehäuse abgewandten Ende Befestigungsmittel aufweist, mit welchen er oberhalb der Sitzhöhe des Fahrers in Fahrtrichtung vor der Windschutzscheibe des Fahrzeuges befindlich festlegbar ist;
die Befestigungsmittel in Form einer Halteplatte (2) ausgebildet sind, an welcher der Haltearm (6) gelagert ist; und
die Halteplatte (2) an einem Karosserieteil (4) des Fahrzeuges, insbesondere der Windschutz- oder Frontscheibe in nachrüstbarer Weise anklebbar ist.

2. Spiegel nach Anspruch 1, **dadurch gekennzeichnet, daß** der Haltearm (6) an der Halteplatte (2) beweglich verstellbar gelagert ist.

3. Spiegel nach Anspruch 2, **dadurch gekennzeichnet, daß** die Lagerung des Haltearms (6) an der Halteplatte (2) durch ein Kugelgelenk erfolgt.

4. Spiegel nach Anspruch 2, **dadurch gekennzeichnet, daß** die Lagerung des Haltearms (6) an der Halteplatte (2) durch ein Schwenkgelenk erfolgt.

5. Spiegel nach einem der Ansprüche 1 bis 4, **dadurch gekennzeichnet, daß** die Lagefixierung des Haltearms (6) gegenüber der Halteplatte (2) bei Übersteigung einer bestimmten, auf die Lagerung einwirkenden Kraft aufhebbar ist.

6. Spiegel nach einem der Ansprüche 1 bis 5, **dadurch gekennzeichnet, daß** die Halteplatte (2) am Bereich des oberen Randes der Windschutzscheibe anklebbar ist.

7. Spiegel nach einem der Ansprüche 1 bis 6, **dadurch gekennzeichnet, daß** im Bereich der Verklebung die Schichtfolge Glas (4) - Primer (10) - Klebstoff (8) - Halteplatte (2) vorliegt.

8. Spiegel nach einem der Ansprüche 1 bis 7, **dadurch gekennzeichnet, daß** der Klebstoff (8) bevorzugt aus der folgenden Gruppe von Klebstoffen ausgewählt wird: Klebstoffe auf Silikon-, Epoxy- oder Polyurethanbasis, Zweikomponentenkleber oder Einkomponentenkleber.

9. Spiegel nach einem der Ansprüche 1 bis 8, **dadurch gekennzeichnet, daß** die Halteplatte (2) in ihrer Formgebung an den Untergrund (4) angepaßt ist, mit welchem sie zu verkleben ist.

10. Spiegel nach einem der Ansprüche 1 bis 8, **dadurch gekennzeichnet, daß** die Halteplatte (2) aus wenigstens zwei Teilplatten (12, 14) besteht, welche untereinander gelenkig verbunden sind (16; 18).
